# DEMANDE DE BREVET EUROPEEN

(11) **EP 1 995 451 A2**
(43) Date de publication de la demande: **26.11.2008**
(21) Numéro de dépôt: 08156230.8
(22) Date de dépôt: 15.05.2008
(51) Int. Cl.: F02N 11/08

(54) **Procédé de commande de l'arrêt et du redémarrage automatique du moteur d'un véhicule**

(30) Priorité: 23.05.2007 FR 0755210
(71) Demandeur: Peugeot Citroën Automobiles SA, 78943 Vélizy-Villacoublay Cedex (FR)
(72) Inventeur: Mathieu, Boris, 75015, Paris (FR); Guerin, Nicolas, 91440, Bures sur Yvette (FR)
(74) Mandataire: Ménès, Catherine

(57) **Abrégé**

L'invention concerne un procédé de commande de l'arrêt et du redémarrage automatique du moteur thermique d'un véhicule automobile, en fonction de conditions de conduite du véhicule.

Selon le procédé, l'arrêt du moteur est commandé si la vitesse du véhicule est supérieure à un seuil prédéterminé qui peut être par exemple compris entre 15 et 30 km/h et si certaines conditions sont réunies, ces conditions dépendant du type de boite de vitesses équipant le véhicule.

## Description

La présente invention concerne un procédé de commande de l'arrêt et du redémarrage automatique du moteur thermique d'un véhicule automobile muni d'une boite de vitesse mécanique, pilotée ou non. Le véhicule peut être équipé d'un moteur thermique, ou de deux moteurs, l'un thermique et l'autre électrique dans le cas d'un véhicule hybride.

Par boite de vitesses mécanique, on entend une boite de vitesses actionnée à l'aide d'une pédale d'embrayage et d'un levier de changement de rapport.

Afin de réduire la consommation en carburant des véhicules automobiles, des systèmes d'arrêt et de mise en marche automatique du moteur thermique ont été conçus et commercialisés pour permettre l'arrêt du moteur thermique lorsqu'il n'est pas utilisé, par exemple lors des phases de ralenti et plus particulièrement lorsque le véhicule est arrêté à un feu rouge. Ces systèmes sont habituellement désignés par l'appellation « Stop & Start » ou par son abréviation S&S.

Différents systèmes ont déjà été proposés, pour lesquels le moteur est automatiquement arrêté lorsque la vitesse du véhicule est inférieure à un seuil prédéterminé. Ce seuil est généralement choisi égal à 5 km/h. Ainsi, la demande de brevet GB 2413999 décrit un système S&S qui fait dépendre l'arrêt du moteur de certaines situations de conduite, telles que la vitesse du véhicule et l'actionnement, ou non, de l'embrayage ou de la pédale de frein. Le seuil de vitesse est de préférence égal à 5km/h (voir la revendication 2). Le brevet EP 0 158 605 décrit un système S&S avec un seuil de vitesse pour l'arrêt du moteur choisi à 5 km/h (voir colonne 32, ligne 44). Le brevet EP 1 302 359 B1 décrit un système S&S commandant l'arrêt du moteur lorsque les freins du véhicule sont actionnés de manière répétée à de courts intervalles de temps en alternance avec la pédale de gaz et lorsque la vitesse du véhicule est inférieure à une valeur de seuil lors de l'actionnement des freins. La valeur de seuil est comprise entre 2 et 10 km/h, et de préférence entre 4 et 8 km/h (voir revendication 3). Le brevet FR 2 549 141 décrit un système S&S pour lequel l'arrêt du moteur est commandé lorsque la vitesse du véhicule est inférieure à un seuil donné, par exemple 5 km/h (voir page 9 lignes 14-16). Enfin, le brevet US 6,763,903 B2 propose trois seuils de vitesse comme conditions d'arrêt du moteur, mais aucune valeur n'est indiquée. Dans les documents de l'art antérieur, l'arrêt du moteur n'est pas envisagée, ni même suggérée, lorsque la vitesse du véhicule est supérieure à 5 km/h.

La présente invention propose un procédé qui améliore les performances d'un système S&S et notamment la consommation en carburant en essayant de détecter le plus longtemps possible à l'avance la volonté du conducteur d'arrêter le véhicule. Les conditions diffèrent selon que le véhicule est équipé d'une boite de vitesse mécanique pilotée ou non. Par boite de vitesses mécanique pilotée, on entend une boite de vitesses où la sélection et le passage de rapport sont réalisés par des actionneurs. Sur un véhicule équipé de ce type de boite de vitesse, l'ouverture et la fermeture de l'embrayage est également réalisée par un actionneur.

De façon plus précise l'invention concerne un procédé de commande de l'arrêt et du redémarrage automatique du moteur thermique d'un véhicule automobile, en fonction de conditions de conduite du véhicule. Selon l'invention, l'arrêt du moteur est commandé si la vitesse du véhicule est supérieure ou égale à un seuil de vitesse prédéterminé, supérieure à 15 km/h et qui peut être par exemple compris entre 15 et 30 km/h et si certaines conditions sont réunies.

*Lorsque le véhicule est équipé d'une boite de vitesse mécanique non pilotée, l'arrêt du moteur est commandé si les conditions suivantes sont réalisées :
■ la pédale d'embrayage est relâchée,
■ la boite de vitesse est au point mort, et
■ la vitesse du véhicule est inférieure à un seuil de vitesse choisi dans une la plage de vitesses prédéterminée.

Le moteur est automatiquement redémarré si les conditions suivantes sont réalisées :
■ la pédale d'embrayage est en position enfoncée, et
■ la boite de vitesse est en position de sortie de point mort.

Par sortie de point mort, il est entendu que le véhicule était au point mort et que le conducteur a manifesté son intention de redémarrer en déplaçant par exemple son levier de vitesse (même si à l'instant considéré, une vitesse n'est pas encore engagée à proprement dit).

Le moteur est automatiquement redémarré lorsque la pédale de frein est relâchée.

*Lorsque le véhicule est équipé d'une boite de vitesses mécanique pilotée, le moteur est arrêté si les conditions suivantes sont réalisées :
■ l'embrayage est ouvert,
■ la pédale de frein est enfoncée, et
■ la vitesse du véhicule est inférieure à un seuil de vitesse choisi dans une plage de vitesses prédéterminée.

Le moteur est automatiquement redémarré lorsque la pédale de frein est relâchée.

Ladite plage de vitesses prédéterminée est avantageusement comprise entre 15 et 30 km/h.

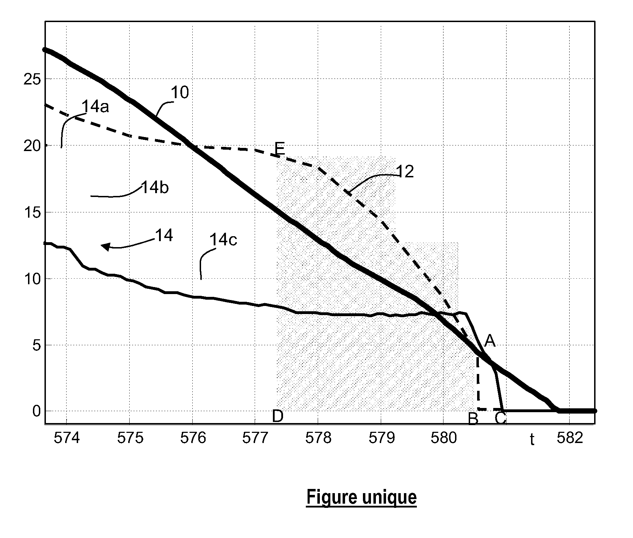

D'autres caractéristiques et avantages de l'invention seront mieux compris à la lecture de la description qui va suivre d'un exemple de mise en oeuvre du procédé et en se référant au dessin annexé sur lequel la figure unique illustre l'économie de carburant que l'on peut réaliser grâce au procédé de la présente invention.

Sur la figure unique, la courbe 10 représente la vitesse d'un véhicule automobile et la courbe 12 sa consommation instantanée exprimée en 100 g/s, en fonction du temps t. La courbe 14 montre l'état de l'embrayage : la partie 14a correspond à la position embrayée, la partie 14b au débrayage et la partie 14c à la position débrayée.

Lorsque le moteur est arrêté à l'instant B, qui correspond à une vitesse de 6 km/h (approximativement comme dans l'art antérieur), un certain gain de consommation serait obtenu.

Par contre si le moteur est arrêté au temps D correspondant à une vitesse du véhicule d'environ 15 km/h, un gain supplémentaire (par rapport à l'hypothèse d'un arrêt à 6 km/h), représenté par l'aire DEAB est obtenu. L'économie en consommation est donc importante.

Les conditions d'arrêt et de redémarrage automatique du moteur dépendent du type de boite de vitesses du véhicule : boite mécanique, mécanique pilotée ou non.

De façon plus précise ces conditions sont :

### A- Si le véhicule est équipé d'une boite de vitesse mécanique non pilotée :

La coupure du moteur est automatiquement commandée si les conditions suivantes sont remplies :
■ la pédale d'embrayage est en position relâchée,
■ la boite de vitesses est au point mort, et
■ la vitesse du véhicule est inférieure à une valeur de seuil de vitesse prédéterminé.

Le redémarrage du moteur est automatiquement commandé si les conditions suivantes sont remplies :
■ la pédale d'embrayage est en position enfoncée, et
■ la boite de vitesses est en position de sortie du point mort et donc le conducteur s'apprête à engager un rapport de vitesse.

### B- Si le véhicule est équipé d'une boite de vitesse mécanique pilotée:

L'arrêt automatique du moteur est commandé si les conditions suivantes sont réunies :
■ la pédale de frein est en position enfoncée,
■ la vitesse du véhicule est inférieure à un seuil de vitesse prédéterminé, et
■ l'embrayage est ouvert (c'est-à-dire que l'arbre de transmission est déconnecté de l'arbre d'entraînement du moteur).

Le moteur est automatiquement redémarré si la pédale de frein est relâchée.

La valeur dudit seuil de vitesse pour l'arrêt du moteur thermique, quelque soit le type de boite de vitesses, est de préférence choisie entre 15 et 30 km/h.

La vitesse du véhicule, les positions des pédales de frein et de l'embrayage et l'état de la boite de vitesses peuvent être déterminés de façon classique à l'aide de capteurs et la stratégie, qui vient d'être décrite, d'arrêt et de redémarrage du moteur thermique peut être mise en oeuvre à l'aide par exemple d'un microprocesseur qui peut être spécialement dédié. Tous ces moyens sont bien connus de l'homme du métier et sont décrits par exemple dans la demande de brevet FR 2 816 891 déposée au nom de la demanderesse et incorporée par référence à la présente description.

Le redémarrage du moteur thermique peut être assuré par tout moyen approprié tel par exemple qu'un démarreur classique ou un alternateur réversible.

Le procédé de la présente invention permet une diminution importante de la consommation du véhicule, cette diminution dépendant du type de cycle parcouru. Une série d'essais a démontré que , par exemple, sur un véhicule doté d'une boite de vitesses mécanique pilotée, le passage d'une vitesse de coupure de 6km/h à 15 km/h permet , grâce à l'arrêt du moteur thermique, de diminuer la consommation de 10% en usage urbain.

## Revendications

1. Procédé de commande de l'arrêt et du redémarrage automatique du moteur thermique d'un véhicule automobile, en fonction de conditions de conduite du véhicule, **caractérisé en ce que** l'arrêt du moteur est commandé si la vitesse du véhicule est supérieure à une vitesse seuil supérieure ou égale à 15 km/h, et, le véhicule étant équipé d'une boite de vitesse mécanique non pilotée si les conditions suivantes sont réalisées :
■ la pédale d'embrayage est relâchée,
■ la boite de vitesse est au point mort, et
■ la vitesse du véhicule est inférieure à un seuil de vitesse choisi dans une plage de vitesses prédéterminée.

2. Procédé selon la revendication 1 **caractérisé en ce que**, le véhicule étant équipé d'une boite de vitesse mécanique non pilotée, le moteur est automatiquement redémarré si les conditions suivantes sont réalisées :
■ la pédale d'embrayage est en position enfoncée, et
■ la boite de vitesse est en position de sortie du point mort.

3. Procédé de commande de l'arrêt et du redémarrage automatique du moteur thermique d'un véhicule automobile, en fonction de conditions de conduite du véhicule, **caractérisé en ce que** l'arrêt du moteur est commandé si la vitesse du véhicule est supérieure à une vitesse seuil supérieure ou égale à 15 km/h, et, le véhicule étant muni d'une boite de vitesses mécanique pilotée, le moteur est automatiquement arrêté si les conditions suivantes sont réalisées:
■ l'embrayage est ouvert,
■ la pédale de frein est enfoncée, et
■ la vitesse du véhicule est inférieure à un seuil de vitesse choisi dans une plage de vitesses prédéterminée.

4. Procédé selon la revendication 3 **caractérisé en ce que**, le véhicule étant muni d'une boite de vitesses mécanique pilotée, le moteur est automatiquement redémarré lorsque la pédale de frein est relâchée.

5. Procédé selon l'une des revendications 1, 3 **caractérisé en ce que** ladite plage de vitesses prédéterminée est comprise entre 15 et 30 km/h.
